# EUROPÄISCHE PATENTSCHRIFT

(11) **EP 3 266 355 B1**
(45) Veröffentlichungstag und Bekanntmachung des Hinweises auf die Patenterteilung: **06.11.2019**
(21) Anmeldenummer: 17179044.7
(22) Anmeldetag: 30.06.2017
(51) Int. Cl.: A47J 45/10

(54) **HALTEKLAMMER FÜR EINEN BEHÄLTER**
HOLDING CLAMP FOR A CONTAINER
CLIP DE MAINTIEN POUR UN RÉCIPIENT

(30) Priorität: 07.07.2016 DE 202016004210 U
(43) Veröffentlichungstag der Anmeldung: 10.01.2018
(73) Patentinhaber: ESBIT Compagnie GmbH, 20457 Hamburg (DE)
(72) Erfinder: Roberto Stein, 22159 Hamburg (DE)
(74) Vertreter: Glawe, Delfs, Moll

(56) Entgegenhaltungen:
- US-A- 116 330
- US-A- 172 848
- US-A- 1 183 990
- US-A- 1 505 369
- US-A1- 2004 174 028

## Beschreibung

Die Erfindung betrifft ein System aus einem Behälter und einer Halteklammer, insbesondere zur Handhabung von direkt über einem Kocher beheizbaren Konserven.

Für die Zubereitung von warmen Speisen unterwegs, beispielsweise beim Camping, werden häufig Konserven mit Fertiggerichten verwendet. Die Behälter mit enthaltenen Nahrungsmitteln werden dabei über einem Kocher erhitzt. Hat das Gericht die gewünschte Temperatur erreicht, stellt sich das Problem, dass die Konserve selbst eine so hohe Temperatur aufweist, dass sie mit den Händen nicht mehr handhabbar ist.

In US 1 505 369 A wird ein Griff vorgestellt, der einfach an einen Behälter angebracht werden kann, aus dem Flüssigkeit ausgeschenkt werden kann.

Der Erfindung liegt die Aufgabe zugrunde, ein System aus einem Behälter und einer Halteklammer vorzustellen, die eine sichere Handhabung des Behälters erlaubt. Ausgehend vom genannten Stand der Technik wird die Aufgabe gelöst mit den Merkmalen des unabhängigen Anspruchs. Vorteilhafte Ausführungsformen sind in den Unteransprüchen angegeben.

Das erfindungsgemäße System umfasst eine Halteklammer mit einer Fassung, wobei ein oberer Bereich der Fassung an ein oberes Ende des Behälters und ein unterer Bereich der Fassung an einen Boden des Behälters angepasst ist. Ein Griffabschnitt hat einen oberen Schenkel und einen unteren Schenkel, wobei der obere Schenkel über einen ersten Verbindungsabschnitt mit dem oberen Bereich der Fassung und der untere Schenkel über einen zweiten Verbindungsabschnitt mit dem unteren Bereich der Fassung verbunden ist. Bei der Halteklammer des erfindungsgemäßen Systems kann die Fassung durch Zusammendrücken der Schenkel unter Spannung gesetzt werden.

Die Halteklammer des erfindungsgemäßen Systems ist so gestaltet, dass eine stabile Verbindung zu dem Behälter hergestellt werden kann. Indem die Fassung an den Behälter angepasst ist, steht die Halteklammer in einem eigenständigen Eingriff mit dem Behälter. Es ist also keine Krafteinwirkung einer Bedienperson erforderlich, um den Eingriff aufrechtzuerhalten. Allerdings ist dieser Eingriff regelmäßig nicht stabil genug, um den Behälter anheben und handhaben zu können. Durch das Zusammendrücken der Schenkel des Griffabschnitts wird der Behälter fest in der Fassung eingespannt, so dass eine sichere Handhabung des Behälters möglich ist. Die Stabilität der Verbindung zwischen Halteklammer und Behälter ermöglicht es, den Behälter nicht nur anzuheben, sondern auch zu kippen, beispielsweise um eine heiße Flüssigkeit aus dem Behälter in eine Tasse umzufüllen. Wird die Halteklammer wieder entspannt, bleibt der Eingriff zwischen der Halteklammer und dem Behälter aufrechterhalten. Nur durch absichtliches Lösen wird die Halteklammer von dem Behälter getrennt.

Durch das Zusammendrücken des Griffabschnitts wird die Fassung in vertikaler Richtung gespannt, sodass der obere Bereich der Fassung mit einer höheren Kraft am oberen Ende des Behälters anliegt und dass der untere Bereich der Fassung mit einer höheren Kraft am Boden des Behälters anliegt. Die beiden Schenkel des Griffabschnitts können eine im Wesentlichen horizontale Ausrichtung haben. Die beim Zusammenrücken der Schenkel ausgeübte Kraft wirkt dann im Wesentlichen in vertikaler Richtung. Die Richtungsangaben beziehen sich auf die mit dem aufrecht stehenden Behälter in Eingriff befindliche Halteklammer und sind nicht als Einschränkung zu verstehen.

Der obere Bereich der Fassung kann einen oberen Extrempunkt aufweisen. Der obere Extrempunkt ist eingeschlossen zwischen einem oberen Verbindungsabschnitt, der sich von dem Extrempunkt bis zu dem oberen Schenkel des Griffabschnitts erstreckt, und einem oberen Halteabschnitt, der sich von dem Extrempunkt bis zu einer Stirnfläche der Halteklammer erstreckt.

Der obere Verbindungsabschnitt kann einen Winkel zwischen 10° und 40°, vorzugsweise zwischen 20° und 30° mit der Vertikalen einschließen. Der obere Halteabschnitt kann einen Winkel von höchstens 10°, vorzugsweise von höchstens 5° mit der Vertikalen einschließen. Der obere Halteabschnitt ist vorzugsweise frei von einer konkaven Krümmung. Dabei wird die von dem Extrempunkt eingeschlossene Krümmung als konvex bezeichnet. Der obere Halteabschnitt setzt also die von dem Extrempunkt eingeschlossene Krümmung fort, ohne noch einmal in die entgegengesetzte Richtung gekrümmt zu sein.

Der untere Bereich der Fassung kann einen unteren Extrempunkt aufweisen. Der untere Extrempunkt ist eingeschlossen zwischen einem unteren Verbindungsabschnitt, der sich von dem Extrempunkt bis zu dem unteren Schenkel des Griffabschnitts erstreckt, und einem unteren Halteabschnitt, der sich von dem unteren Extrempunkt bis zu einer Stirnfläche der Halteklammer erstreckt. Der Winkel, den der untere Verbindungsabschnitt mit der Vertikalen einschließt, kann kleiner sein als der Winkel, den der obere Verbindungsabschnitt mit der Vertikalen einschließt. Beispielsweise kann der untere Verbindungsabschnitt einen Winkel zwischen 5° und 30°, vorzugsweise zwischen 10° und 20° mit der Vertikalen einschließen.

Der untere Halteabschnitt kann eine konkave Krümmung aufweisen, also eine Krümmung, die zu der von dem Extrempunkt eingeschlossenen Krümmung entgegengesetzt ist. Ein zwischen dem unteren Extrempunkt und dem konkaven Abschnitt angeordneter Teil des unteren Halteabschnitts kann einen Winkel zwischen 60° und 90°, vorzugsweise zwischen 70° und 80° mit der Vertikalen einschließen. Ein zwischen dem konkaven Abschnitt und der Stirnfläche der Halteklammer angeordneter Teil des unteren Halteabschnitts schließt vorzugsweise einen Winkel von mehr als 90° mit der Vertikalen ein. Beispielsweise kann der Winkel zwischen 90° und 110° liegen.

Der obere Verbindungsabschnitt kann in einer konkaven Krümmung in den oberen Schenkel des Griffabschnitts übergehen. Der untere Verbindungsabschnitt kann in einer konkaven Krümmung in den unteren Schenkel des Griffabschnitts übergehen. Die beiden Schenkel des Griffabschnitts können durch ein Endteil miteinander verbunden sein, wobei der Übergang zwischen den Schenkeln und dem Endteil durch eine konvexe Krümmung gebildet wird. Jeweils zwischen den Krümmungen kann die Halteklammer geradlinige Abschnitte aufweisen. Der obere Verbindungsabschnitt kann zwischen zweimal so lang und fünfmal so lang sein wie der obere Halteabschnitt. Der untere Verbindungsabschnitt kann zwischen zweimal so lang und fünfmal so lang sein wie der untere Halteabschnitt. Der untere Verbindungsabschnitt kann zwischen zweimal so lang und fünfmal so lang sein wie der obere Verbindungsabschnitt. Die Schenkel des Griffabschnitts können zwischen zweimal so lang und fünfmal so lang sein wie der obere Verbindungsabschnitt. Der untere Verbindungsabschnitt kann zwischen zweimal so lang und fünfmal so lang sein wie der vertikale Abstand zwischen den beiden Schenkeln des Griffabschnitts.

In einer bevorzugten Ausführungsform des erfindungsgemäßen Systems sind die Schenkel der Halteklammer im Wesentlichen parallel zueinander ausgerichtet. Durch die gegenüberliegenden Schenkel ist der Griffbereich insgesamt leicht zu greifen und es kann gleichmäßig Druck auf beide Schenkel ausgeübt werden. Der Druck wird senkrecht von oben und unten auf die Schenkel ausgeübt. Die Gefahr, beim Halten oder Kippen des Behälters mit Hilfe der Halteklammer von den Schenkeln abzurutschen, wird so deutlich reduziert.

Durch die beschriebene Gestaltung des oberen Bereichs der Fassung kann die Halteklammer an einen Behälter angehängt werden, zum Beispiel während des Anbringens der Halteklammer an einen Behälter. Zudem kann der in Richtung des unteren Bereichs der Fassung ausgerichtete Abschnitt als Stützfläche für den Behälter wirken, der einen festen Abstand zwischen Halteklammer und Behälter vorgibt, noch bevor die Halteklammer komplett im Eingriff mit dem Behälter steht. Beim Zusammendrücken der Schenkel kann von der Halteklammer in dem Abschnitt der in Richtung des unteren Bereichs der Fassung ausgerichtet ist eine Kraft auf den Behälter übertragen werden, die den Behälter in Position hält.

Durch die beschriebene Gestaltung des unteren Bereichs der Fassung kann ein Abrutschen der Halteklammer verhindert werden, wenn die Fassung der Halteklammer nicht unter Spannung steht. Eine Halteklammer, die einmal mit einem Behälter in Eingriff gebracht wurde, verliert nicht ihren Halt am Behälter. Ebenso kann über diesen ersten Abschnitt im unteren Bereich der Fassung eine Kraft mit einer Komponenten in Richtung des Griffabschnitts der Halteklammer auf den Behälter übertragen werden.

Die konkave Krümmung des unteren Halteabschnitts ermöglicht ein besonders einfaches Anbringen der Halteklammer an einem Behälter, sogar wenn dieser fest auf einer Unterfläche aufsteht. Durch etwas Druck auf den Griffabschnitt wird der untere Bereich der Fassung gegen den Behälter gedrückt und durch die ansteigende Ausgestaltung der Fassung leicht angehoben bis der untere Teil der Fassung in Eingriff steht. Insbesondere bei heißen Behältern ist diese Ausgestaltung von Vorteil, da die heißen Behälter beim Anbringen der Halteklammer nicht festgehalten werden müssen. Zugleich kann die konkave Krümmung des unteren Halteabschnitts als eine Art Rastnase wirken, die in eine Vertiefung am Boden des Behälters einrasten kann.

Wenn der obere Verbindungsabschnitt länger ist als der untere Verbindungsabschnitt, werden der Griffabschnitt und damit die Halteklammer leichter greifbar. Außerdem ist der Griffabschnitt von der heißesten Stelle, dem Boden des Behälters und gegebenenfalls dem darunter befindlichen Kocher entfernt. Auch wenn der Behälter noch auf dem Boden steht kann die Halteklammer angebracht werden und der Griffabschnitt ist leicht erreichbar. Bei einer Kippbewegung, beispielsweise um heiße Flüssigkeit aus dem Behälter umzufüllen, ermöglicht der Griffabschnitt im oberen Bereich der Halteklammer eine kontrollierte Kippbewegung.

Vorzugsweise ist die Halteklammer aus Metall hergestellt. Metall weist eine hohe Hitzebeständigkeit auf. Es sind jedoch auch andere temperaturfeste und elastische Materialien verwendbar. In einer vorteilhaften Ausführungsform ist die Halteklammer einstückig ausgebildet. Durch die einstückige Ausführung der Halteklammer wird der Fertigungsaufwand wesentlich reduziert und die Notwendigkeit einer Montage entfällt vollständig. Eine einstückig ausgestaltete Halteklammer bewirkt eine gleichmäßige Übertragung der Kräfte von den Schenkeln auf die Fassung.

Die Halteklammer ist bevorzugt aus gebogenem Federblech hergestellt. Federblech bietet eine hohe Festigkeit und gleichzeitig eine hohe Elastizität der Halteklammer, die nach der Verformung ohne bleibende Verformung elastisch in den Ausgangszustand zurückkehrt, was ein häufiges Wiederverwenden der Halteklammer ermöglicht. Die Halteklammer kann aus Federblech ausgestanzt werden.

Die Halteklammer kann wie beschrieben eine Mehrzahl von konvexen und konkaven Krümmungen aufweisen. Es ist möglich, dass alle Krümmungen sich in der vertikalen Ebene erstrecken und dass die Halteklammer frei ist von sonstigen Verformungen.

Bei dem System aus einem Behälter und einer Halteklammer ist der obere Bereich der Fassung dazu ausgebildet, eine Struktur des Behälters, vorzugsweise einen Rand des Behälters, zu umgreifen. In den meisten Fällen wird ein Deckel einer Konserve entfernt, bevor die Konserve über einem Kocher erwärmt wird oder das Essen wird in einen Behälter ohne Deckel umgefüllt. In diesem Fall greift die Halteklammer direkt hinter die Außenwand des Behälters. Durch das Zusammendrücken der Schenkel wird der Behälter im oberen Bereich der Fassung fixiert und in Richtung des Griffabschnitts wird eine Kraft auf den Behälter übertragen, während er auf dem unteren Bereich der Fassung aufliegt. Durch das Umgreifen ergibt sich eine stabile Verbindung zwischen Halteklammer und Behälter. Für Konserven, die erst nach der Zubereitung geöffnet werden, ist es vorteilhaft, einen zusätzlichen Rand einer Konserve zu hintergreifen, der radial gegenüber der Umfangsfläche des Behälters vorspringt. Indem der obere Halteabschnitt frei von einer konkaven Krümmung ist, kann der Deckel des Behälters entfernt werden, während die Halteklammer in Eingriff mit dem Behälter steht. Dies erlaubt eine sichere Handhabung, beispielsweise einer handelsüblichen Konserve, beim Umgang mit heißen Gerichten oder Flüssigkeiten.

Vorzugsweise bildet die konkave Krümmung des unteren Halteabschnitts eine Rastnase, die in eine Ausnehmung an dem Boden des Behälters eingreift. In handelsüblichen Konserven finden sich häufig ringförmige umlaufende Rinnen am Boden, die nicht zuletzt zur Versteifung der Konserve beitragen. Durch das Eingreifen der Rastnase in die Rinne wird ein Abrutschen der Halteklammer im entspannten Zustand, sowie beim Zusammendrücken der Schenkel, verhindert und die Halteklammer insgesamt in ihrer Position eingerastet.
Sind die Verbindungsabschnitte wie beschrieben relativ zur Vertikalen geneigt, so befindet sich der Griffabschnitt im entspannten Zustand der Halteklammer in einem definierten Abstand zur Umfangsfläche des Behälters. Um die Halteklammer mit dem Behälter in Eingriff zu bringen oder die Halteklammer von dem Behälter zu lösen, muss ein wenig Kraft aufgebracht werden, um die Rastnase aus der Ausnehmung am Boden des Behälters einzurasten oder zu entfernen.

In einer vorteilhaften Ausführungsform erstreckt sich die Rastnase, vorzugsweise geradlinig, über die gesamte Breite des unteren Bereichs der Fassung. Die Kontaktfläche zwischen Rastnase und Behälter ist so insgesamt vergrößert, was ein Kippen oder Kippeln des Behälters der in festem Eingriff mit der Halteklammer steht, erschwert. Insbesondere bei runden Behältern oder Konserven, die eine ringförmige Ausnehmung an der Bodenseite aufweisen, wird so schon in einem entspannten Zustand der Halteklammer verhindert, dass sich diese lateral entlang des Umfangs des Behälters verschiebt. Insgesamt vermindert die geradlinige Rastnase ein Verrutschen und Verdrehen des Behälters in der Halteklammer, insbesondere bei einer Kippbewegung.

Für eine stabile Verbindung zwischen der Halteklammer und dem Behälter ist es von Vorteil, wenn ein zu dem Extrempunkt benachbarter Bereich des oberen Halteabschnitts und/oder des oberen Verbindungsabschnitts an dem Behälter anliegt. Für den unteren Bereich der Fassung kann ebenfalls gelten, dass ein zu dem Extrempunkt benachbarter Bereich des unteren Halteabschnitts und/oder des unteren Verbindungsabschnitts an dem Halter anliegt. Die Halteklammer so gestaltet sein, dass der obere Extrempunkt und/oder der untere Extrempunkt selbst nicht an dem Behälter anliegen. Ferner kann die Halteklammer so gestaltet sein, dass das Stirnende des unteren Halteabschnitts und/oder das Stirnende des oberen Halteabschnitts nicht an dem Behälter anliegen.

Erfindungsgemäß umfasst das System einen ersten Verbindungszustand, in dem die Halteklammer mit dem Behälter in Eingriff steht, wobei der Griffabschnitt nicht gespannt ist. Der erste Verbindungzustand ist vorzugsweise so stabil, dass er ohne Unterstützung einer Bedienperson aufrecht erhalten bleibt. Die Halteklammer bleibt vorzugsweise an dem Behälter hängen, unabhängig davon wie der Behälter zur Schwerkraft ausgerichtet wird. Ein an den Griffabschnitt anschließender Bereich des oberen Verbindungsabschnitts und/oder des unteren Verbindungsabschnitts kann einen größeren Abstand zu der Wand des Behälters haben als der an den jeweiligen Extrempunkt anschließende Bereich des Verbindungsabschnitts.

In einem zweiten Verbindungszustand des Systems ist der Griffabschnitt zusammengedrückt. Der Griffabschnitt hat im zweiten Verbindungszustand einen geringeren Abstand zu der Wand des Behälters als im ersten Verbindungszustand. Ein zu dem oberen Extrempunkt benachbarter Bereich des oberen Halteabschnitts und des oberen Verbindungsabschnitts sind gegen eine Wulst des Behälters gespannt. Ein zu dem unteren Extrempunkt benachbarter Bereich des unteren Halteabschnitts und des unteren Verbindungsabschnitts sind gegen eine Wulst des Behälters gespannt. Die Stirnenden und die Extrempunkte am oberen und am unteren Bereich der Fassung berühren den Behälter vorzugsweise nicht. Die Verbindung ist so stabil, dass eine an dem Griffabschnitt der Halteklammer angreifende Person den Behälter hochheben kann und in alle Richtungen schwenken kann, ohne dass der Behälter sich von der Halteklammer löst. Dies gilt auch dann, wenn der Behälter beispielsweise mit Wasser gefüllt ist.

In einer bevorzugten Ausführungsform der Erfindung ist der Griffabschnitt in einem entspannten Zustand der Halteklammer von einer Umfangsfläche des Behälters radial beabstandet. Die Halteklammer ist in einem entspannten Zustand, wenn die Fassung in Eingriff mit dem Behälter steht, die Schenkel aber nicht zusammengedrückt werden. Das bedeutet, dass sich der Verbindungsabschnitt diagonal zwischen der Fassung und dem Griffabschnitt erstreckt. Wird Druck auf die Schenkel ausgeübt bewegt sich der Verbindungsbereich aus einer diagonalen Position in Richtung der senkrechten zwischen oberem und unterem Bereich der Fassung. Die Kraft der Halteklammer wird über die Bereiche der Fassung, die dem Griffabschnitt zugewandt sind, auf den Behälter übertragen.

Erfindungsgemäß nimmt der Abstand zwischen dem Griffabschnitt und der Umfangsfläche des Behälters ab, wenn die Schenkel zusammengedrückt werden. Durch das Zusammendrücken der Schenkel bewegen sich die Verbindungsabschnitte vorzugsweise [RJ1] in Richtung der Senkrechten zwischen obere und unterem Bereich der Fassung und der Winkel zwischen dem Verbindungsabschnitt und der Fassung verringert sich. Je mehr Kraft auf die Schenkel ausgeübt wird, desto geringer wird der Abstand zwischen Umfangsfläche des Behälters und dem Griffabschnitt der Halteklammer.

Der Behälter kann im horizontalen Schnitt rund sein. Der Behälter kann an seinem oberen Ende eine umlaufende Wulst umfassen, die nach oben ausgerichtet ist und gegenüber der der Deckel nach unten zurückgesetzt ist. An der Wulst kann der obere Bereich der Fassung angreifen. In seiner Bodenfläche kann der Behälter eine umlaufende Rinne aufweisen. Zwischen der Rinne und der Seitenwand kann eine untere Wulst eingeschlossen sein, an der der untere Bereich der Fassung angreifen kann.

Die Erfindung wird nachfolgend unter Bezugnahme auf die beigefügten Zeichnungen anhand einer vorteilhaften Ausführungsform beispielhaft beschrieben. Es zeigen:
- Fig. 1:: eine Schnittdarstellung einer Halteklammer eines erfindungsgemäßen Systems in einem entspannten Zustand in einer Ausführungsform der Erfindung;
- Fig. 2:: Eine schematische Darstellung der Halteklammer aus Fig. 1 mit einer handelsüblichen Konserve gemäß einem Ausführungsbeispiel der Erfindung;
- Fig. 3:: eine Schnittdarstellung der Halteklammer aus Fig. 1 mit einer Konserve in einem Zustand in dem die Schenkel zusammengedrückt werden.

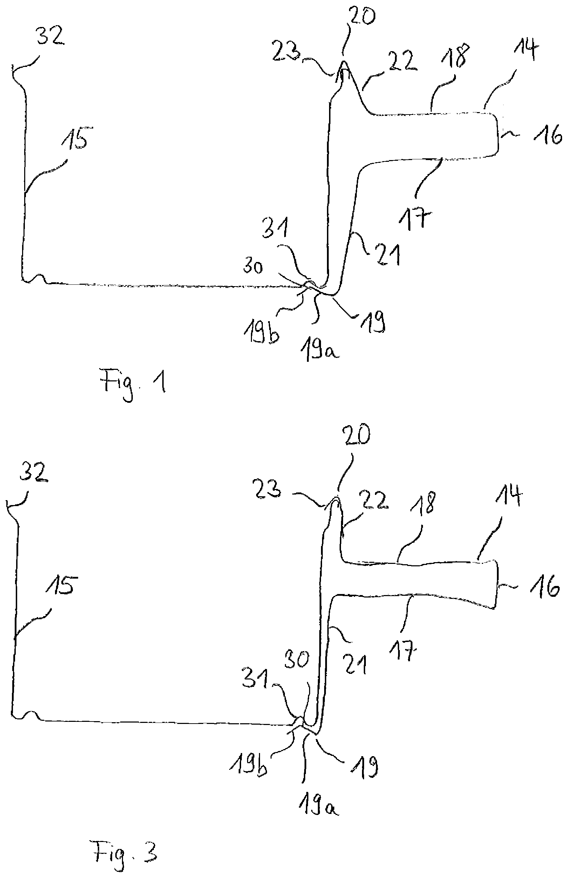

Eine Halteklammer 14 und ein Behälter 15 eines erfindungsgemäßen Systems sind in Fig. 1 gezeigt. Die Halteklammer 14 umfasst eine Fassung 19, 20, die einen Behälter 15 von oben und unten umgreift. Die Halteklammer 14 umfasst ferner einen Griffabschnitt 16, der einen oberen Schenkel 18 und einen unteren Schenkel 17 aufweist. Der obere Schenkel 18 ist über einen oberen Verbindungsabschnitt 22 mit einem oberen Teil der Fassung 20 verbunden, während der untere Schenkel 17 über einen unteren Verbindungsabschnitt 21 mit einem unteren Bereich der Fassung 19 verbunden ist. Die Schenkel 17, 18 sind parallel über- bzw. untereinander angeordnet. Die Schenkel 17, 18 sind so voneinander beabstandet, dass die Fassung 19, 20 durch Zusammendrücken der Schenkel 17, 18 unter Spannung gesetzt werden kann.

Durch Zusammendrücken der Schenkel 17, 18 in vertikaler Richtung wird eine stabile Verbindung zwischen dem Behälter 15 und der Fassung 19, 20 und damit der Halteklammer 14 geschaffen. Dadurch kann der Behälter 15 nicht nur angehoben werden, sondern es ist zusätzlich möglich, den Behälter zu kippen, ohne, dass sich die Halteklammer 14 von dem Behälter 15 löst oder der Behälter 15 in der Halteklammer 14 verrutscht. Die Verbindung kann gelöst werden, indem die Schenkel 17, 18 des Griffabschnitts 16 nicht mehr zusammengedrückt werden und die Halteklammer 14 radial von dem Behälter 15 abgezogen wird und dabei nach oben gekippt wird.

Im gezeigten Ausführungsbeispiel ist die Halteklammer 14 einstückig gestaltet und aus einem gestanzten Streifen aus Federblech hergestellt. Der Streifen hat eine Dicke von ca. 0,5 Millimetern und eine Breite von ca. 15 Millimetern. Die Halteklammer 14 ist insbesondere für die Verwendung mit im Horizontalschnitt runden Behältern 15 geeignet.

Die in Fig. 1 gezeigte Halteklammer 14 befindet sich in einem entspannten Zustand (erster Verbindungszustand), in dem die Halteklammer 14 zwar in Eingriff mit dem Behälter 15 steht, die Schenkel aber nicht zusammengedrückt werden. Der obere Bereich der Fassung 20 umfasst einen Halteabschnitt 23, der in Richtung des unteren Bereichs der Fassung ausgerichtet ist. In der gezeigten Ausführungsform hintergreift dieser Bereich der Fassung eine Wulst 32 des Behälters. Ein radiales Abrutschen der Halteklammer 14 von dem Behälter 15 wird dadurch erschwert. Der untere Bereich der Fassung weist einen Halteabschnitt 19 mit einem ersten Abschnitt 19a und einem zweiten Abschnitt 19b auf. Der erste Abschnitt 19a ist in eine von dem Griffbereich abgewandte Richtung ausgerichtet und ist in Richtung des oberen Bereichs der Fassung 20 geneigt. Dadurch ist der Behälter zwischen dem oberen Bereich der Fassung und dem unteren Bereich der Fassung eingerahmt. Ein darauffolgender zweiter Abschnitt 19b der Fassung 19 ist in eine von dem Griffbereich 16 abgewandte Richtung ausgerichtet und ist in eine von dem oberen Bereich der Fassung 20 abgewandte Richtung geneigt. Durch die unterschiedliche Neigung der beiden aufeinanderfolgenden Abschnitte 19a und 19b ist eine Rastnase 30 ausgebildet. Die Rastnase 30 der Halteklammer 14 greift in eine Ausnehmung 31 an dem Boden des Behälters 15 ein. Dadurch rastet die Halteklammer am Behälter ein.

Im entspannten Zustand handelt es sich bei den Winkeln zwischen den Verbindungsabschnitten 21, 22 und den Schenkeln 17, 18, sowie den Winkeln zwischen den Verbindungsabschnitten 21, 22 und dem oberen bzw. unteren Bereich der Fassung 19, 30 um stumpfe Winkel. Wie in Fig. 1 zu erkennen ist dadurch der Griffabschnitt 16 von der Umfangsfläche des Behälters 15 beabstandet.

Fig. 3 zeigt eine Schnittdarstellung der Halteklammer 14, die sich im Eingriff mit einem zylinderförmigen Behälter 15 befindet, bei der die Schenkel 17, 18 zusammengedrückt werden (zweiter Verbindungszustand). Wie in der Figur zu erkennen, sind die Winkel zwischen den Verbindungsabschnitten 21, 22 und den Schenkeln 17, 18, sowie den Winkel zwischen den Verbindungsabschnitten 21, 22 und dem oberen bzw. unteren Bereich der Fassung 19, 30 nahezu rechtwinklig. Der Abstand zwischen Griffabschnitt 16 und Umfangsfläche des Behälters 15 ist deutlich reduziert. Es ist sogar möglich, dass die Verbindungsabschnitte 21, 22 mit der Umfangsfläche des Behälters 15 teilweise in Kontakt sind (nicht gezeigt). Durch das Zusammendrücken der Schenkel 17, 18 wird über den oberen Halteabschnitt 23 sowie den oberen Verbindungsabschnitt eine Kraft auf die obere Wulst des Behälters 15 übertragen. Gleichzeitig wird der Behälter 15 über die Rastnase 30 in dem unteren Bereich der Fassung 19 in Position gehalten. Dabei wird über einen dem Griffabschnitt 16 zugewandten Abschnitt 19a des unteren Halteabschnitts 19 und den unteren Verbindungsabschnitt 21 eine Kraft auf den Behälter 15 übertragen. Dies hat zur Folge, dass sich der Abstand zwischen dem Griffabschnitt 16 und der Umfangsfläche des Behälters 15 verringert. Die Verbindungsabschnitte 21, 22 erstrecken sich nun nahezu senkrecht zwischen der Fassung 19, 20 und den Schenkeln 17, 18 des Griffabschnitts 16.

Beim Kippen des Behälters 15 in eine um 90° verkippte Position im Vergleich zur Ausgangsposition, beispielsweise um etwa heißes Wasser aus dem Behälter 15 in eine Tasse zu füllen, ist die Verbindung zwischen der Halteklammer 14 und dem Behälter 15 drehsicher. Sowohl eine Rotation des Behälters 15, als auch ein Kippen des Behälters 15 aufgrund der Schwerkraft können durch die stabile Verbindung vermieden werden.

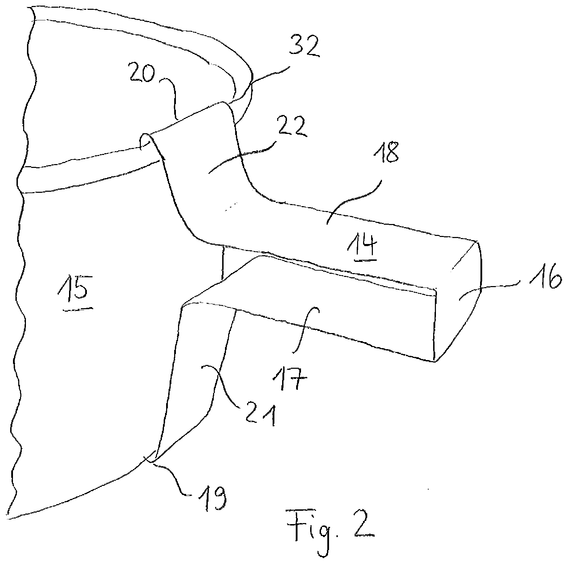

In Fig. 2 ist eine schematische Darstellung einer Halteklammer 14 mit einem zylinderförmigen Behälter 15 gemäß einem Ausführungsbeispiel der Erfindung gezeigt. Wie in der Figur zu erkennen ist, kann die Halteklammer 14 an einer beliebigen Stelle des Behälters 15 angebracht werden. Ein oberer Teil der Fassung 19 hintergreift eine nach oben vorspringende Wulst 32 an der Oberseite des Behälters 15. Ein Deckel des Behälters (nicht gezeigt) kann auf diese Weise auch während die Halteklammer 14 mit dem Behälter 15 in Eingriff steht, problemlos entfernt werden. Die Schenkel 17, 18 haben in dieser Ausführungsform der Halteklammer 14 eine Länge von ca. 30 Millimetern, sodass der Griffabschnitt bequem mit mehreren Fingern gehalten werden kann.

Schließlich wird in dieser Ausführungsform der Halteklammer 14 durch das Zusammendrücken der Schenkel 17, 18 eine Spannung auf die Fassung 19, 20 übertragen und der Behälter drehsicher eingeklemmt.

Die Handhabung der so in die Halteklammer 14 eingesetzten Konserve 15 erfolgt über den als Griff fungierenden Griffabschnitt 16 mit zwei gegenüberliegenden Schenkeln 17, 18. Wie in der Figur zu erkennen, kann der Halter an jeder Position der Konserve angeordnet werden. Die Halteklammer ist wiederverwendbar, materialsparend und nimmt wenig Platz in Anspruch.

## Patentansprüche

1. System aus einem Behälter (15) und einer Halteklammer (14), wobei die Halteklammer (14) für einen Behälter (15), insbesondere zur Handhabung von direkt über einem Kocher beheizbaren Konserven ausgelegt ist, wobei die Halteklammer (14) eine über einen Griffabschnitt (16) spannbare Fassung (19, 20) umfasst, wobei ein oberer Bereich der Fassung (20) an ein oberes Ende des Behälters (15) und ein unterer Bereich der Fassung (19) an einen Boden des Behälters (15) angepasst ist, wobei der Griffabschnitt (16) einen oberen Schenkel (18) und einen unteren Schenkel (17) aufweist, wobei der obere Schenkel (18) über einen oberen Verbindungsabschnitt (22) mit dem oberen Bereich der Fassung (20) und der untere Schenkel (17) über einen unteren Verbindungsabschnitt (21) mit dem unteren Bereich der Fassung (19) verbunden ist, **dadurch gekennzeichnet, dass** in einem ersten Verbindungszustand des Systems die Halteklammer (14) mit dem Behälter (15) in Eingriff steht, und dass in einem zweiten Verbindungszustand des Systems der Griffabschnitt (16) zusammengedrückt ist, wobei der Griffabschnitt (16) in dem zweiten Verbindungszustand einen geringeren Abstand zu der Wand des Behälters (15) hat als in dem ersten Verbindungszustand.

2. System nach Anspruch 1, **dadurch gekennzeichnet, dass** der obere Bereich der Fassung (20) einen oberen Extrempunkt aufweist, der eingeschlossen ist zwischen dem oberen Verbindungsabschnitt (22) und einem oberen Halteabschnitt (23), der sich von dem Extrempunkt bis zu einer Stirnfläche der Halteklammer erstreckt.

3. System nach Anspruch 2, **dadurch gekennzeichnet, dass** der obere Halteabschnitt (23) frei ist von einer konkaven Krümmung.

4. System nach einem der Ansprüche 1 bis 3, **dadurch gekennzeichnet, dass** der untere Bereich der Fassung (19) einen unteren Extrempunkt aufweist, der eingeschlossen ist zwischen dem unteren Verbindungsabschnitt (21) und einem unteren Halteabschnitt (19a, 19b), der sich von dem Extrempunkt bis zu einer Stirnfläche der Halteklammer erstreckt.

5. Systemnach Anspruch 4, **dadurch gekennzeichnet, dass** der untere Halteabschnitt (19a, 19b) eine konkave Krümmung aufweist.

6. System nach einem der Ansprüche 1 bis 5, **dadurch gekennzeichnet, dass** die Schenkel (17, 18) des Griffabschnitts im Wesentlichen parallel zueinander ausgerichtet sind.

7. System nach einem der Ansprüche 1 bis 6, **dadurch gekennzeichnet, dass** der untere Verbindungsabschnitt (22) länger ist als der obere Verbindungsabschnitt (21), vorzugsweise mindestens doppelt so lang, weiter vorzugsweise mindestens dreimal so lang.

8. System nach einem der Ansprüche 1 bis 7, **dadurch gekennzeichnet, dass** die Halteklammer (14) einstückig ausgebildet ist.

9. System nach einem der Ansprüche 1 bis 8, **dadurch gekennzeichnet, dass** die Halteklammer (14) aus gebogenem Federblech hergestellt ist.

10. System nach einem der Ansprüche 1 bis 9, wobei der obere Halteabschnitt (20) eine nach oben weisende Wulst (32) des Behälters (15) hintergreift und wobei der untere Halteabschnitt (19a, 19b) in eine am Boden des Behälters (15) ausgebildete Rinne (31) eingreift.

11. System nach einem der Ansprüche 1 bis 10, **dadurch gekennzeichnet, dass** das obere und/oder das untere Stirnende der Halteklammer (14) nicht an dem Behälter (15) anliegen.

12. System nach einem der Ansprüche 1 bis 11, **dadurch gekennzeichnet, dass** der obere Extrempunkt und/oder der untere Extrempunkt nicht an dem Behälter (15) anliegen.

13. System nach einem der Ansprüche 1 bis 12, **dadurch gekennzeichnet, dass** der Griffabschnitt (16) in einem entspannten Zustand der Halteklammer von einer Umfangsfläche des Behälters (15) radial beabstandet ist.

14. System nach einem der Ansprüche 1 bis 13, **dadurch gekennzeichnet, dass** der Abstand zwischen dem Griffabschnitt (16) und der Umfangsfläche des Behälters (15) abnimmt, wenn die Schenkel (17) zusammengedrückt werden.

## Claims

1. System consisting of a container (15) and a retaining clip (14), wherein the retaining clip (14) is designed for a container (15), in particular for handling cans that are heatable directly above a stove, wherein the retaining clip (14) comprises a mounting (19, 20) that is clampable via a handle portion (16), wherein an upper region of the mounting (20) is adapted to an upper end of the container (15) and a lower region of the mounting (19) is adapted to a base of the container (15), wherein the handle portion (16) has a upper leg (18) and a lower leg (17), wherein the upper leg (18) is connected via an upper connecting portion (22) to the upper region of the mounting (20) and the lower leg (17) is connected via a lower connecting portion (21) to the lower region of the mounting (19), **characterized in that**, in a first connection state of the system, the retaining clip (14) is engaged with the container (15), and **in that**, in a second connection state of the system, the handle portion (16) is pressed together, wherein the handle portion (16) is at a smaller distance from the wall of the container (15) in the second connection state than in the first connection state.

2. System according to Claim 1, **characterized in that** the upper region of the mounting (20) has an upper extreme point, which is enclosed between the upper connecting portion (22) and an upper retaining portion (23), which extends from the extreme point to an end face of the retaining clip.

3. System according to Claim 2, **characterized in that** the upper retaining portion (23) does not have a concave curvature.

4. System according to one of Claims 1 to 3, **characterized in that** the lower region of the mounting (19) has a lower extreme point, which is enclosed between the lower connecting portion (21) and a lower retaining portion (19a, 19b), which extends from the extreme point to an end face of the retaining clip.

5. System according to Claim 4, **characterized in that** the lower retaining portion (19a, 19b) has a concave curvature.

6. System according to one of Claims 1 to 5, **characterized in that** the legs (17, 18) of the handle portion are oriented substantially parallel to one another.

7. System according to one of Claims 1 to 6, **characterized in that** the lower connecting portion (22) is longer than the upper connecting portion (21), preferably at least twice as long, more preferably at least three times as long.

8. System according to one of Claims 1 to 7, **characterized in that** the retaining clip (14) is formed in one piece.

9. System according to one of Claims 1 to 8, **characterized in that** the retaining clip (14) is manufactured from bent spring sheet.

10. System according to one of Claims 1 to 9, wherein the upper retaining portion (20) engages behind an upwardly facing bulge (32) of the container (15), and wherein the lower retaining portion (19a, 19b) engages in a channel (31) formed in the base of the container (15).

11. System according to one of Claims 1 to 10, **characterized in that** the upper and/or the lower end of the retaining clip (14) do not bear against the container (15).

12. System according to one of Claims 1 to 11, **characterized in that** the upper extreme point and/or the lower extreme point do not bear against the container (15).

13. System according to one of Claims 1 to 12, **characterized in that** the handle portion (16) is spaced apart radially from a circumferential face of the container (15) in an unclamped state of the retaining clip.

14. System according to one of Claims 1 to 13, **characterized in that** the spacing between the handle portion (16) and the circumferential face of the container (15) decreases when the legs (17) are pressed together.

## Revendications

1. Système composé d'un récipient (15) et d'un clip de maintien (14), dans lequel le clip de maintien (14) est conçu pour un récipient (15), en particulier pour la manipulation de conserves pouvant être chauffées directement sur un appareil de cuisson, dans lequel le clip de maintien (14) comprend une prise (19, 20) serrable au moyen d'une partie de poignée (16), dans lequel une région supérieure de la prise (20) est adaptée à une extrémité supérieure du récipient (15) et une région inférieure de la prise (19) est adaptée à un fond du récipient (15), dans lequel la partie de poignée (16) présente une branche supérieure (18) et une branche inférieure (17), dans lequel la branche supérieure (18) est accrochée à la région supérieure de la prise (20) au moyen d'une partie d'accrochage supérieure (22) et la branche inférieure (17) est accrochée à la région inférieure de la prise (19) au moyen d'une partie d'accrochage inférieure (21), **caractérisé en ce que** dans un premier état d'accrochage du système le clip de maintien (14) est en prise avec le récipient (15), et **en ce que** dans un deuxième état d'accrochage du système la partie de poignée (16) est serrée, dans lequel la partie de poignée (16) se trouve à une plus faible distance de la paroi du récipient (15) dans le deuxième état d'accrochage que dans le premier état d'accrochage.

2. Système selon la revendication 1, **caractérisé en ce que** la région supérieure de la prise (20) présente un point extrême supérieur, qui est inclus entre la partie d'accrochage supérieure (22) et une partie de maintien supérieure (23), qui s'étend du point extrême jusqu'à une face frontale du clip de maintien.

3. Système selon la revendication 2, **caractérisé en ce que** la partie de maintien supérieure (23) est dépourvue d'une courbure concave.

4. Système selon l'une quelconque des revendications 1 à 3, **caractérisé en ce que** la région inférieure de la prise (19) présente un point extrême inférieur, qui est inclus entre la partie d'accrochage inférieure (21) et une partie de maintien inférieure (19a, 19b), qui s'étend du point extrême jusqu'à une face frontale du clip de maintien.

5. Système selon la revendication 4, **caractérisé en ce que** la partie de maintien inférieure (19a, 19b) présente une courbure concave.

6. Système selon l'une quelconque des revendications 1 à 5, **caractérisé en ce que** les branches (17, 18) de la partie de poignée sont orientées de façon essentiellement parallèle l'une à l'autre.

7. Système selon l'une quelconque des revendications 1 à 6, **caractérisé en ce que** la partie d'accrochage inférieure (22) est plus longue que la partie d'accrochage supérieure (21), de préférence au moins deux fois plus longue, de préférence encore au moins trois fois plus longue.

8. Système selon l'une quelconque des revendications 1 à 7, **caractérisé en ce que** le clip de maintien (14) est réalisé en une seule pièce.

9. Système selon l'une quelconque des revendications 1 à 8, **caractérisé en ce que** le clip de maintien (14) est fabriqué en une tôle à ressort pliée.

10. Système selon l'une quelconque des revendications 1 à 9, dans lequel la partie de maintien supérieure (20) s'accroche à l'arrière d'un rebord tourné vers le haut (32) du récipient (15) et dans lequel la partie de maintien inférieure (19a, 19b) s'engage dans une rainure (31) formée dans le fond du récipient (15).

11. Système selon l'une quelconque des revendications 1 à 10, **caractérisé en ce que** l'extrémité frontale supérieure et/ou inférieure du clip de maintien (14) ne s'applique(nt) pas sur le récipient (15).

12. Système selon l'une quelconque des revendications 1 à 11, **caractérisé en ce que** le point extrême supérieur et/ou le point extrême inférieur ne s'applique(nt) pas sur le récipient (15).

13. Système selon l'une quelconque des revendications 1 à 12, **caractérisé en ce que** la partie de poignée (16) est écartée radialement d'une surface périphérique du récipient (15) dans un état détendu du clip de maintien.

14. Système selon l'une quelconque des revendications 1 à 13, **caractérisé en ce que** la distance entre la partie de poignée (16) et la surface périphérique du récipient (15) diminue, lorsque les branches (17) sont serrées l'une vers l'autre.
